**Europäisches Patentamt**

(19) **European Patent Office**

**Office européen des brevets**

(11) Veröffentlichungsnummer: **0 220 688**

**B1**

(12) # EUROPÄISCHE PATENTSCHRIFT

(45) Veröffentlichungstag der Patentschrift:
21.09.88

(51) Int. Cl.⁴: **A 47 J 31/057**

(21) Anmeldenummer: **86114756.9**

(22) Anmeldetag: **23.10.86**

(54) **Kaffee- oder Teemaschine.**

(30) Priorität: **28.10.85 DE 3538245**

(43) Veröffentlichungstag der Anmeldung:
**06.05.87 Patentblatt 87/19**

(45) Bekanntmachung des Hinweises auf die Patenterteilung:
**21.09.88 Patentblatt 88/38**

(84) Benannte Vertragsstaaten:
**AT BE CH ES FR GR IT LI LU NL SE**

(56) Entgegenhaltungen:
**DE-A-2 023 596**
**DE-A-2 855 412**
**DE-C-926 087**
**DE-U-7 116 716**
**FR-A-554 252**
**GB-A-2 120 534**

(73) Patentinhaber: **Melitta- Werke Bentz & Sohn,
Ringstrasse 99, D-4950 Minden 1 (DE)**

(72) Erfinder: **Woon, Chan Kwan, 69, Pok Fu Lam
Road, 11 floor Block B, King Ming Mansion,
West Point Hong Kong (HK)**
Erfinder: **von der Lühe, Detlef Max Theodor,
Cimbria Court - Flat A3, 24, Conduit Road Hong
Kong (HK)**

(74) Vertreter: **Loesenbeck, Karl- Otto, Dipl.- Ing.,
Jöllenbecker Strasse 164, D-4800 Bielefeld 1 (DE)**

EP 0 220 688 B1

**Beschreibung**

Die vorliegende Erfindung betrifft eine Kaffee- oder Teemaschine mit einem einen Durchlauferhitzer aufnehmenden Sockel, einem auf dem Sockel aufgebauten Frischwasserbehälter mit einer in den Durchlauferhitzer einmündenden Auslauföffnung, einem Aufnahmebehälter für den Kaffee oder den Tee sowie einem Filtergefäß, welches in Gebrauchslage mit einem Stützflansch auf dem oberen Rand des Aufnahmebehälters aufliegt.

Kaffee- oder Teemaschinen der gattungsgemäßen Art sind in vielfältigen Ausführungsformen bekannt (z. B. DE-A-2 855 412).

Die bislang bekannten Kaffee- oder Teemaschinen dieser Art sind derart konzipiert, daß ihr Platzbedarf unabhängig vom Betriebszustand immer gleich groß ist, das heißt, der Platzbedarf bekannter Kaffee- oder Teemaschinen ist bei Nichtgebrauch genauso groß wie bei der Benutzung derartiger Maschinen.

Dies ist so lange von untergeordneter Bedeutung, als eine derartige Kaffee- oder Teemaschine in einer Küche einen mehr oder weniger bestimmten Stellplatz einnimmt, der für andere Küchenarbeiten nicht zwingend benötigt wird.

Kommt hingegen der Frage des Raumbedarfes bei Nichtgebrauch eine größere Bedeutung zu, sei es, weil am Aufstellort beengte räumliche Verhältnisse herrschen, oder sei es, weil der Wunsch besteht, eine Kaffee- oder Teemaschine bei Reisen mitzuführen, können bislang bekannte Kaffee- oder Teemaschinen nicht befriedigen.

Der vorliegenden Erfindung liegt die Aufgabe zugrunde, eine Kaffee- oder Teemaschine der gattungsgemäßen Art zu gestalten, daß deren Platzbedarf bei Nichtgebrauch beträchtlich kleiner ist als ihr Platzbedarf bei ihrer Benutzung.

Diese Aufgabe wird erfindungsgemäß dadurch gelöst, daß der Innendurchmesser des Aufnahmebehälters größer ist als der Außendurchmesser des Filtergefäßes oberhalb seines Stützflansches, daß der Frischwasserbehälter eine Grundfläche aufweist, die mindestens der Größe der Grundfläche des Aufnahmebehälters entspricht, und daß die lichte Höhe des Frischwasserbehälters mindestens der Höhe des Aufnahmebehälters nebst dem in umgekehrter Gebrauchslage in den Aufnahmebehälter eingesetzten Filtergefäß entspricht.

Eine derartige Kaffee- oder Teemaschine bietet den Vorteil, daß das Filtergefäß und der Aufnahmebehälter für den Kaffee oder den Tee bei Nichtgebrauch der Kaffee-oder Teemaschine im Frischwasserbehälter verstaut werden können, so daß der Platzbedarf einer derartigen Kaffee- oder Teemaschine bei Nichtgebrauch beträchtlich kleiner ist als ihr Platzbedarf bei der Filtration von Kaffee oder Tee.

Weitere Merkmale der Erfindung sind Gegenstand der abhängigen Ansprüche.

In den beigefügten Zeichnungen ist ein Ausführungsbeispiel der Erfindung dargestellt, welches im folgenden näher beschrieben wird.

Es zeigen:

Fig. 1 eine perspektivische Darstellung einer erfindungsgemäßen Kaffee- oder Teemaschine nach Art eines Sprengbildes,

Fig. 2 eine perspektivische Darstellung der Kaffee- oder Teemaschine gemäß Fig. 1 im Betriebszustand,

Fig.3 einen Teilschnitt nach der Linie III-III in Fig. 4,

Fig. 4 eine Ansicht in Richtung des Pfeiles IV in Fig. 2, dargestellt ohne Deckel sowie ohne Filtergefäß und Aufnahmebehälter,

Fig. 5 eine Vorderansicht der Kaffee- oder Teemaschine in Betriebsstellung, teilweise im Schnitt dargestellt.

Die in den Zeichnungen dargestellte Kaffee-oder Teemaschine weist einen Sockel 10 auf, der in bekannter Weise einen nicht dargestellten Durchlauferhitzer aufnimmt.

Auf dem Sockel 10 ist ein Frischwasserbehälter 11 aufgebaut. Dieser Frischwasserbehälter 11 ist an seiner tiefsten Stelle mit einem Auslauf 12 versehen, der in den erwähnten Durchlauferhitzer einmündet.

Auslaufseitig ist an den Durchlauferhitzer ein Steigrohr 13 angeschlossen, welches seinerseits in ein Überlaufrohr 14 einmündet.

Weiterhin umfaßt die Kaffee- oder Teemaschine ein Filtergefäß 15 sowie einen Aufnahmebehälter 16 zur Aufnahme des hergestellten Getränkes.

Auf das Filtergefäß 15 ist eine Deckscheibe 17 mit einer Durchlauföffnung 18 aufgesetzt.

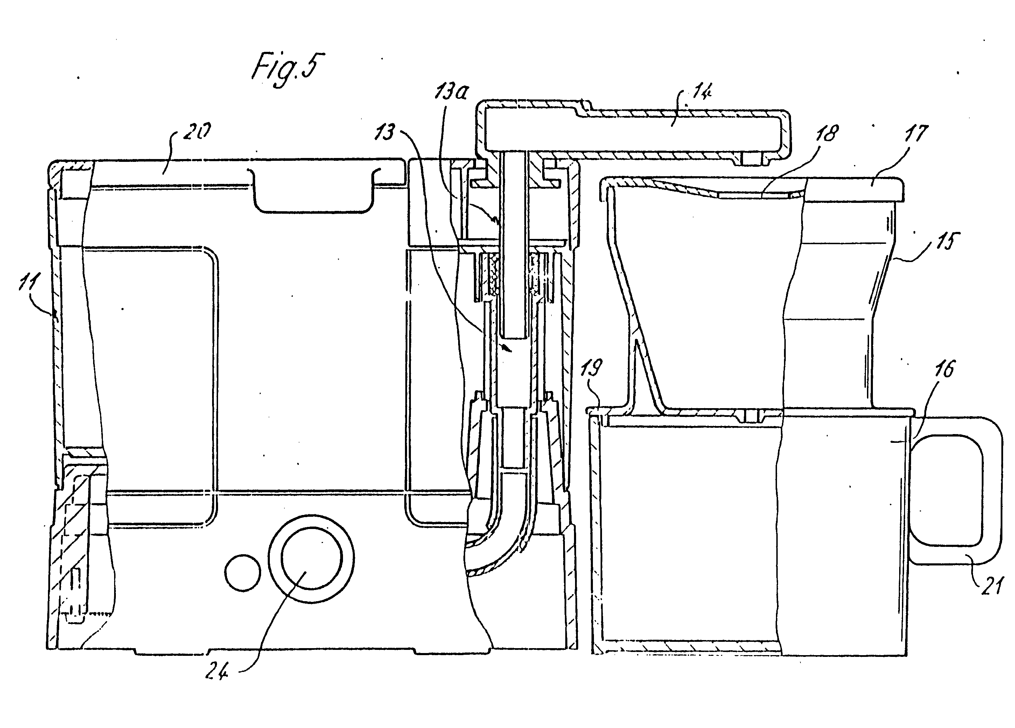

Wie insbesondere Fig. 5 deutlich macht, ist das Filtergefäß 15 an seinem in Gebrauchslage unteren Ende mit einem Stützflansch 19 versehen, der sich auf dem oberen Rand des Aufnahmebehälters 16 abstützt.

Ebenfalls Fig. 5 zeigt deutlich, daß das Steigrohr 13 zweiteilig ausgebildet ist, wobei ein oberer Rohrabschnitt 13a, der mit dem Überlaufrohr 14 fest verbunden ist, gegenüber dem unteren Abschnitt des Steigrohres 13 teleskopartig verschiebbar und um seine Längsachse drehbar ist.

Die Oberseite des Frischwasserbehälters 11 ist durch einen anscharnierten Deckel 20 verschließbar.

Der Innendurchmesser des Aufnahmebehälters 16 ist größer als der Durchmesser des Filtergefäßes 15 oberhalb seines Stützflansches 19 und ebenfalls größer als der Außendurchmesser der Deckscheibe 17. Dadurch wird es möglich, das Filtergefäß 15 nebst Deckscheibe 17 in umgekehrter Gebrauchslage in den Aufnahmebehälter 16 einzuführen.

Die Grundfläche des Frischwasserbehälters 11 ist größer als die Grundfläche des Aufnahmebehälters 16, die lichte Höhe des Frischwasserbehälters 11 entspricht mindestens der Höhe des Aufnahmebehälters 16 nebst dem

in umgekehrter Gebrauchslage in den Aufnahmebehälter 16 eingesetzten Filtergefäß 15.

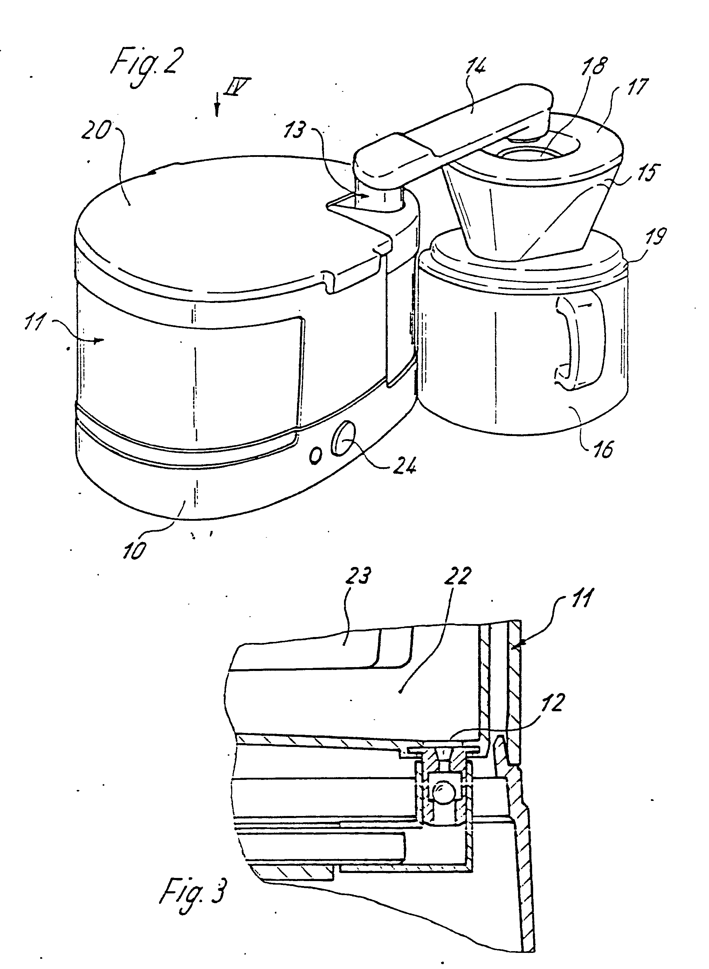

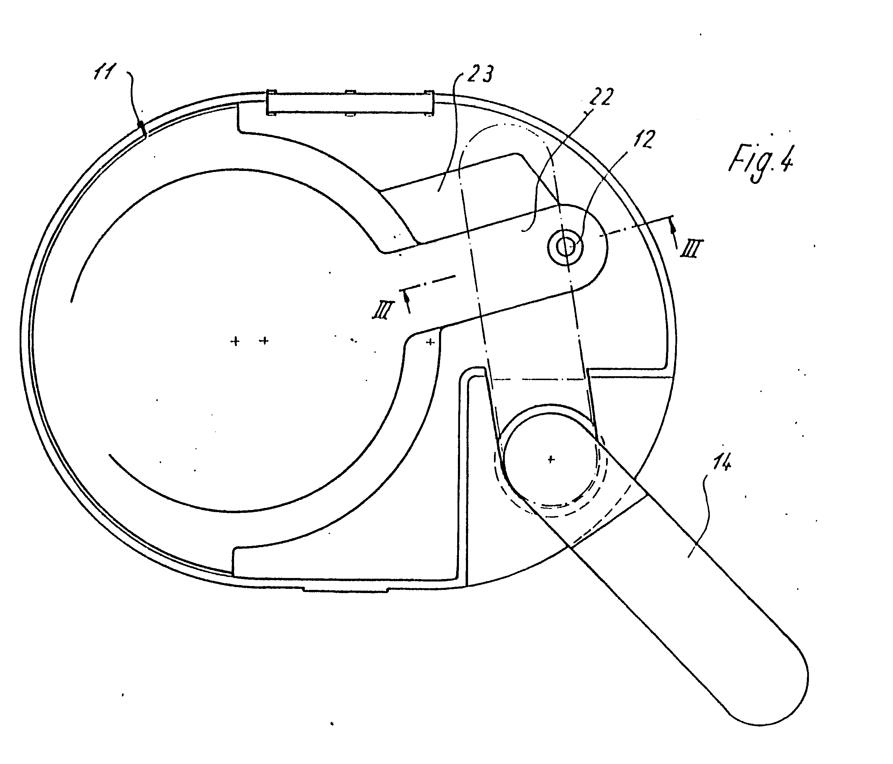

Wie insbesondere die Fig. 3 und 4 deutlich zeigen, ist im Inneren des Frischwasserbehälters 11 eine der Projektionsfläche eines am Aufnahmebehälter 16 angebrachten Griffes 21 entsprechende Ausnehmung 22 vorgesehen. Benachbart dieser Ausnehmung 22 ist eine Griffaussparung 23 vorgesehen.

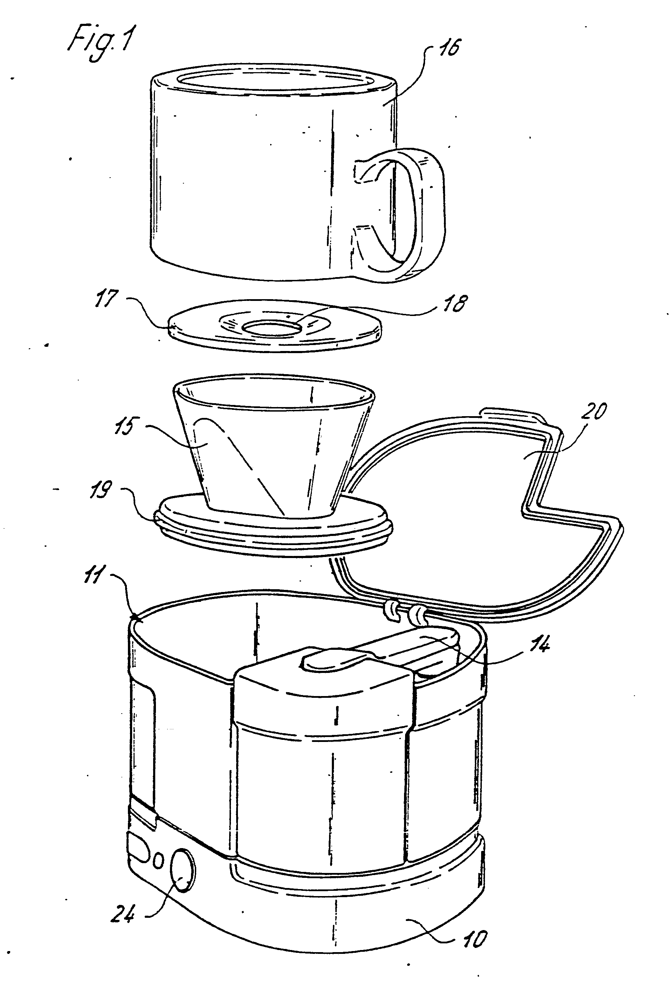

Durch die vorstehend beschriebenen Merkmale der in den Figuren gezeigten Kaffee- oder Teemaschine wird es möglich, Aufnahmebehälter 16 nebst Filtergefäß 15 bei Nichtgebrauch im Frischwasserbehälter 11 verstauen zu können. Dabei besteht sowohl die Möglichkeit, zunächst das Filtergefäß 15 nebst Deckscheibe 17 in den Frischwasserbehälter 11 einzusetzen und dann den Aufnahmebehälter 16 über diese Teile zu stülpen, so wie dies in Fig. 1 angedeutet ist. Ebenso besteht die Möglichkeit, das Filtergefäß 15 in umgekehrter Gebrauchslage in den Aufnahmebehälter 16 einzusetzen und diesen in seiner Gebrauchslage in den Frischwasserbehälter 11 einzusetzen.

Das Überlaufrohr 14 kann bei Nichtgebrauch der Kaffee- oder Teemaschine ebenfalls in den Bereich des Frischwasserbehälters 11 gebracht werden, so wie dies in Fig. 4 angedeutet ist. Durch teleskopartige Teilung des Überlaufrohres 13 kann durch eine axiale Verschiebung des oberen Rohrabschnittes 13a das damit verbundene Überlaufrohr 14 nach Einschwenken in den Innenraum des Frischwasserbehälters 11 so weit abgesenkt werden, daß das Überlaufrohr 14 nicht mehr über die obere Begrenzung des Frischwasserbehälters 11 hinaus vorsteht.

Zur Inbetriebnahme wird in umgekehrter Reihenfolge vorgegangen, das heißt, nach Öffnen des Deckels 20 wird zunächst das Überlaufrohr 14 angehoben, aus dem Bereich des Frischwasserbehälters 1 herausgeschwenkt, danach wird der Aufnahmebehälter 16 nebst Filtergefäß 15 und Deckscheibe 17 entnommen und nach der Befüllung des Filtergefäßes 15 mit Kaffee oder Tee in die aus Fig. 2 ersichtliche Gebrauchslage gebracht.

Der Frischwasserbehälter 11 wird mit der gewünschten Wassermenge gefüllt, und durch Betätigung eines Ein-Aus-Schalters 24 wird die Kaffee- oder Teemaschine nunmehr in Betrieb genommen.

## Bezugszeichenliste

10 Sockel
11 Frischwasserbehälter
12 Auslauf
13 Steigrohr
13a oberer Rohrabschnitt
14 Überlaufrohr
15 Filtergefäß
16 Aufnahmebehälter
17 Deckscheibe
18 Durchlauföffnung
19 Stützflansch
20 Deckel
21 Griff
22 Ausnehmung
23 Griffaussparung
24 Ein-Aus-Schalter

## Patentansprüche

1. Kaffee- oder Teemaschine mit einem einen Durchlauferhitzer aufnehmenden Sockel (10), einem auf dem Sockel (10) aufgebauten Frischwasserbehälter (11) mit einer in den Durchlauferhitzer einmündenden Auslauföffnung, einem Aufnahmebehälter (16) für den Kaffee oder den Tee sowie einem Filtergefäß (15), welches in Gebrauchslage mit einem Stützflansch auf dem oberen Rand des Aufnahmebehälters aufliegt, dadurch gekennzeichnet, daß der Innendurchmesser des Aufnahmebehälters (16) größer ist als der Außendurchmesser des Filtergefäßes (15) oberhalb seines Stützflansches, daß der Frischwasserbehälter (11) eine Grundfläche aufweist, die mindestens der Größe der Grundfläche des Aufnahmebehälters (16) entspricht und daß die lichte Höhe des Frischwasserbehälters (11) mindestens der Höhe des Aufnahmebehälters (16) nebst dem in umgekehrter Gebrauchslage in den Aufnahmebehälter (16) eingesetzten Filtergefäß (15) entspricht.

2. Kaffee- oder Teemaschine nach Anspruch 1, dadurch gekennzeichnet, daß auf das Filtergefäß (15) eine Deckscheibe (17) mit einer Durchlauföffnung (18) aufgesetzt ist, deren Außendurchmesser kleiner ist als der Innendurchmesser des Aufnahmebehälters (16).

3. Kaffee- oder Teemaschine nach Anspruch 1 oder 2, dadurch gekennzeichnet, daß das Steigrohr (13) zweiteilig ausgebildet ist und einen oberen, mit dem Überlaufrohr (14) fest verbundenen Rohrabschnitt (13a) aufweist, der gegenüber dem Steigrohr (13) im übrigen sowohl axial verschiebbar wie auch um seine Längsachse drehbar ist.

4. Kaffee- oder Teemaschine nach Anspruch 3, dadurch gekennzeichnet, daß das Überlaufrohr (14) bei Nichtgebrauch in den Innenraum des Frischwasserbehälters (11) einschwenkbar und absenkbar ist.

5. Kaffee- oder Teemaschine nach einem oder mehreren der vorhergehenden Ansprüche, dadurch gekennzeichnet, daß der Frischwasserbehälter (11) durch einen anscharnierten Deckel (20) Verschließbar ist.

## Claims

1. A coffee or tea percolator having a base (10) to accomodate a water heater, a fresh-water receptacle (11) mounted on said base (10) and being provided with an outlet discharging into said water heater, a bowl (16) for powdered coffee or tea, and a filter cup (15) with a supporting flange resting upon the upper brim of said coffee or tea bowl (16) when said filter cup (15) is to be used, characterized in that the inside diameter of said coffee or tea bowl (16) is larger than the outside diameter of said filter cup (15) on the topside of its supporting flange, that said fresh-water receptacle (11) has a bottom area that is at least as large as the bottom area of said coffee or tea bowl (16), and that the inside height of said fresh-water receptacle (11) is at least equal to the height of said coffee or tea bowl (16) inclusive of said filter cup (15) inserted into said coffee or tea bowl (16) in an inverted service position.

2. A coffee or tea percolator as described in claim 1 above, characterized in that said filter cup (15) is topped with a cover plate (17) having a central hole (18) and an outside diameter that is smaller than the inside diameter of said coffee or tea bowl (16).

3. A coffee or tea percolator as described in claims 1 or 2 above, characterized in that the riser tube (13) is made up of two sections and provided with a top section (13a) rigidly connected with the overflow duct (14), said top section (13a) being slidably arranged in the axial direction and rotatable about its longitudinal axis relative to said riser tube (13) as a whole.

4. A coffee or tea percolator as described in claim 3 above, characterized in that said overflow duct (14) can be swung inwards into the interior of of said fresh-water receptacle (11) and lowered when it is not in use.

5. A coffee or tea percolator as described in one or more of the above claims, characterized in that said fresh-water receptacle (11) can be closed by means of a hinged lid (20).

## Revendications

1. Machine à café ou à thé munie d'un socle 10 reçevant un chauffe-eau rapide, un récipient d'eau froide 11 disposé sur le socle 10 comportant une ouverture de sortie débouchant dans le chauffe-eau, un récipient collecteur 16 pour le café ou le thé, ainsi qu'un récipient de filtration 15 qui en position d'utilisation repose par une collerette d'appui sur la bordure supérieure du récipient collecteur, caractérisée en ce que le diamètre intérieur du récipient 16 est plus grand que le diamètre extérieur du récipient de filtration 15 au-dessus de sa collerette d'appui, que le récipient d'eau froide 11 présente une surface de base qui correspond au moins à la surface de base du récipient collecteur 16 et que la hauteur apparente du récipient d'eau froide 11 correspond au moins à la hauteur du récipient collecteur 16 avec le récipient de filtration 15 introduit en position renversée.

2. Machine à café ou à thé selon la revendication 1, caractérisée en ce qu'un disque-couvercle 17 est placé sur lerécipient de filtration 15 avec une ouverture de passage 18, dont le diamètre extérieur est plus petit que le diamètre intérieur du récipient collecteur 16.

3. Machine à café ou à thé selon la revendication 1 ou la revendicatin 2, caractérisée en ce que la colonne montante 13 comporte deux parties et une section de tube supérieure 13a solidaire du tube de trop plein 14 qui contrairement à la colonne montante 13 peut d'ailleurs se déplacer aussi bien axialement que tourner autour de son axe longitudinal.

4. Machine à café ou à thé selon la revendication 3, caractérisée en ce que le tube de trop plein 14 lors de la non utilisation peut être rabattu et plongé dans l'espace intérieur du récipient d'eau froide 11 .

5. Machine à café ou à thé selon l'une ou plusieurs des revendications précédentes, caractérisée en ce que le récipient d'eau froide 11 peut être fermé par un couvercle à charnière 20.

*Fig.1*

Fig. 2

Fig. 3

3

Fig. 4

Fig.5

0 220 688